Europäisches Patentamt

European Patent Office

Office européen des brevets

(11) Numéro de publication: **0 351 265 B1**

(12) **FASCICULE DE BREVET EUROPEEN**

(45) Date de publication de fascicule du brevet: **03.11.93**

(51) Int. Cl.5: **C08F 4/655**, C25B 3/12, C08F 10/00

(21) Numéro de dépôt: **89401779.7**

(22) Date de dépôt: **23.06.89**

(54) **Composant catalytique pour la polymérisation des oléfines et son procédé de préparation.**

(30) Priorité: **23.06.88 FR 8808447**

(43) Date de publication de la demande:
**17.01.90 Bulletin 90/03**

(45) Mention de la délivrance du brevet:
**03.11.93 Bulletin 93/44**

(84) Etats contractants désignés:
**AT BE CH DE ES FR GB GR IT LI LU NL SE**

(56) Documents cités:
**GB-A- 1 182 651**
**LU-A- 67 668**

(73) Titulaire: **ECP-ENICHEM POLYMERES FRANCE S.A.**
**11 rue de l'Abreuvoir**
**F-92411 Courbevoie(FR)**

(72) Inventeur: **Brusson, Jean Michel**
**49 Rue Jean Moulin**
**F-59130 Lambersart(FR)**
Inventeur: **Bujadoux, Karel**
**31 Avenue Van Pelt**
**F-62300 Lens(FR)**
Inventeur: **Fuchs, Jean Marc**
**34 Rue Roger Salengro**
**F-62172 Bouvigny-Boyeffles(FR)**
Inventeur: **Petit, Francis**
**27 Allée de la Clairière**
**F-59650 Villeneuve d'Ascq(FR)**
Inventeur: **Mortreux, André**
**17 rue Gambetta**
**F-59510 Hem(FR)**

EP 0 351 265 B1

## Description

La présente invention concerne un procédé de préparation, par voie électrochimique, d'un composent catalytique pour la polymérisation des oléfines, un composant catalytique pour cette polymérisation, ainsi qu'une application dudit composent catalytique à la polymérisation des oléfines, plus particulièrement à la polymérisation de l'éthylène et à la copolymérisation de l'éthylène avec au moins une $\alpha$-oléfine.

L'obtention de catalyseurs contenant au moins un dérivé de métal de transition, encore appelés "catalyseurs Ziegler-Natta", et leur utilisation pour la polymérisation des $\alpha$-oléfines sont connues depuis longtemps. L'homme de l'art a sans cesse cherché à améliorer ces catalyseurs pour augmenter leur activité catalytique et/ou pour influer sur les caractéristiques des polymères obtenus.

Des travaux ont été également réalisés dans le but d'utiliser les catalyseurs Ziegler-Netta dans des conditions de température élevées permettant un temps de contact plus court entre l'oléfine à polymériser et le catalyseur de façon à augmenter la productivité des installations. Le catalyseur doit alors présenter une stabilité élevée compatible avec ces conditions drastiques de polymérisation en même temps qu'une activité et une vitesse de polymérisation initiale élevées.

L'augmentation de l'activité catalytique des catalyseurs Ziegler-Natta est un souci constant qui vise simultanément par l'utilisation de moindres quantités de catalyseur, à diminuer le coût de fabrication du polymère et à obtenir des polymères dont la teneur en résidus catalytiques soit la plus faible possible. Ce dernier objectif a essentiellement pour but d'éviter la purification des polymères et d'obtenir, sans purification, des polymères n'ayant pas tendance à se dégrader mécaniquement et/ou thermiquement, pendant ou après transformation en produits finis.

Il est connu par ailleurs que les composés de titane à la valence II sont très peu actifs en catalyse Ziegler-Natta. Beaucoup de composés du titane existent à la valence maximale (IV) et leur réduction conduit à des mélanges de composés de titane (III) et de titane (II) qui sont d'autant moins actifs que leur teneur en titane (II) est plus élevée. Un problème de l'amélioration des catalyseurs Ziegler-Natta est donc d'obtenir par réduction de composés de titane (IV), des composés de titane (III) essentiellement à l'exclusion de composés de titane (II).

La demanderesse a maintenant trouvé qu'il est possible de résoudre ce problème au moyen d'un nouveau procédé de réduction de composés de titane (IV). Les composants catalytiques obtenus par ce procédé ont une très grande activité quelles que soient les conditions de polymérisation.

Il est connu de préparer par voie électrochimique des composants de catalyseurs Ziegler-Natta. Ainsi le document US-A-3.787.383 décrit un procédé électrolytique pour préparer certains bis(halogénométal)-méthanes tel que le bis(dichloroaluminium)méthane $Cl_2AlCH_2AlCl_2$, selon lequel on électrolyse un électrolyte de formule $HOAlCl_2$ en présence d'un dihalogénure de méthylène tel $CH_2Cl_2$ ou un gem-dihalogénure entre une anode en aluminium et une cathode du même métal ou bien en matériau inerte (platine, carbone). A l'activateur ainsi obtenu est ajouté un dérivé de métal de transition de façon à obtenir le système catalytique, ce dérivé de métal de transition ne subissant alors pas de réduction.

Il est également connu par le document US-A-3.546.083 de préparer simultanément les deux composants (catalyseur et activateur) du système catalytique par électrolyse d'un milieu contenant un dihalogénure de méthylène et un électrolyte tel $HOAlCl_2$, l'anode étant constituée d'un métal de transition associé à l'aluminium et la cathode, non consommée pendant l'électrolyse, étant constituée de métal ou graphite. La préparation du composé de métal de transition a donc lieu par oxydation de l'anode métallique. Il n'est pas précisé à quel état de valence se trouve le métal de transition dans le composé formé.

La demanderesse a maintenant trouvé qu'il est possible de préparer simultanément les deux composants du système catalytique en électrolysant un composé dihalogéné en présence d'une anode contenant de l'aluminium (préparation de l'activateur) et simultanément en réduisant un composé de titane (IV) à la cathode (préparation du catalyseur).

Ainsi un premier objet de la présente invention consiste en un procédé de préparation d'un composant catalytique pour la polymérisation des oléfines, comprenant l'oxydation électrochimique au moins partielle de l'aluminium dans un solvant halogéné du type $\alpha,\omega$-dihalogénoalcane, caractérisé en ce qu'il comprend simultanément la réduction électrochimique d'un composé de titane (IV).

L' $\alpha,\omega$-dihalogénoalcane a pour formule générale $X-(CH_2)_n-X'$ dans laquelle X et X', identiques ou différents, sont chacun un atome d'halogène, tels le chlore, le brome et le fluor et n est un nombre entier compris entre 1 et 10, de préférence entre 1 et 6. La nature des atomes d'halogène et la valeur de n sont telles que l'$\alpha,\omega$-dihalogénoalcane soit liquide dans les conditions normales de température et de pression. Parmi les composés répondant à la formule générale précédente on choisit avantageusement le dichlorométhane, le 1,2-dichloroéthane, le 1,4-dichlorobutane ou leurs mélanges.

Il peut être souhaitable, de façon à diminuer la quantité de solvant halogéné tout en conservant la même concentration en composé de titane (IV), de réaliser l'oxydation et la réduction électrochimiques simultanées en la présence additionnelle d'un solvant inerte. On choisit de préférence ce solvant parmi les hydrocarbures aliphatiques ou cycloaliphatiques saturés ayant de 6 à 14 atomes de carbone, dont la température d'ébullition, sous pression atmosphérique n'est pas inférieure à 60°C et leurs mélanges. Il peut s'agir par exemple d'une coupe d'hydrocarbures aliphatiques saturés en $C_{10}$-$C_{12}$. Le solvant inerte est utilisé en une quantité pouvant aller jusqu'à 100 parties en poids, pour 100 parties en poids de solvant halogéné.

L'oxydation et la réduction électrochimiques simultanées ont de préférence lieu dans une cellule d'électrolyse en faisant passer un courant électrique entre une anode et une cathode plongées dans l'électrolyte comprenant le solvant halogéné, le cas échéant additionné d'un solvant inerte, le composé de titane (IV). De par sa constitution, cet électrolyte est peu conducteur, toutefois il est possible d'augmenter sa conductivité en lui ajoutant des quantités pouvant aller jusqu'à 10 fois la quantité du composé de titane (IV) (ex primée en moles) d'au moins une oléfine supérieure. On peut utiliser à cette fin une α-oléfine ayant par exemple de 4 à 16 atomes de carbone, avantageusement l'hexène-1.

Le procédé selon l'invention est de préférence mis en oeuvre à une température comprise entre 0°C et la température d'ébullition du solvant (halogéné et le cas échéant, inerte) ou bien celle de l'α-oléfine. L'électrolyse étant exothermique, il y a lieu de prévoir un dispositif de refroidissement du milieu réactionnel et, le cas échéant, une cellule d'électrolyse pouvant fonctionner sous légère surpression (jusqu'à 2 bars environ).

Le composé de titane (IV) soumis à réduction électrochimique est choisi parmi les composés de formule générale $Ti(OR)_nX_{4-n}$ dans laquelle X est un atome d'halogène choisi parmi le fluor, le chlore, le brome et l'iode, R est un radical alkyle ayant de 1 à 10 atomes de carbone et $0 \leq n \leq 4$. Avantageusement le composé de titane (IV) est le tétrachlorure de titane, le dichlorodiéthoxytitane, le dichlorodi(n)butoxytitane. La concentration du milieu réactionnel en composé de titane (IV) est avantageusement comprise entre 20 et 600 millimoles par litre. Bien qu'une concentration élevée pose des problèmes de conductivité et de diffusion des espèces dans un milieu dont la viscosité est augmentée, elle permet par contre de diminuer le rapport molaire solvant halogéné/titane dans le catalyseur obtenu et ainsi d'éviter les inconvénients de la présence d'une quantité trop importante de composé halogéné lors de la polymérisation.

Selon une variante du procédé de la présente invention, il est possible d'ajouter au milieu réactionnel pendant l'électrolyse, un composé de vanadium (IV) ou de vanadium (V) choisi parmi les composés de formule générale $VO(OR)_mX_{3-m}$ dans laquelle X est un halogène, R est un radical alkyle ayant de 1 à 6 atomes de carbone et $0 \leq m \leq 3$, et les composés de formule $VX_4$ dans laquelle X est un halogène. Des exemples de tels composés sont $VCl_4$ et $VOCl_3$. La concentration du milieu réactionnel en composé de vanadium est avantageusement comprise entre 0 et 100 millimoles par litre.

Des analyses effectuées sur le mélange réactionnel après oxydo-réduction électrochimique dans des conditions variées ont montré que, de façon surprenante, quelle que soit la quantité d'électricité ayant traversé le milieu réactionnel, le dérivé de titane (IV) n'était pas réduit au-delà du degré d'oxydation (III). On a ainsi trouvé qu'il est possible de faire passer la quantité de courant nécessaire pour générer le composé organoaluminique halogéné sans modifier le degré d'oxydation du composé de titane (III) obtenu. L'oxydation et la réduction électrochimiques simultanées sont ainsi, de manière avantageuse, réalisées en faisant passer dans le milieu réactionnel une quantité d'électricité comprise entre 1 et 12 Faradays par mole de titane, de préférence entre 1 et 8 Faradays par mole de titane.

L'invention peut être mise en oeuvre selon les trois voies bien connues des électrochimistes : à potentiel cathodique imposé, à potentiel cathodique régulé ou à intensité constante.

L'oxydo-réduction électrochimique à potentiel cathodique imposé est réalisée avec un dispositif comprenant une électrode de référence (par exemple Ag/AgCl/Cl), une électrode de travail (cathode) et une électrode auxiliaire (anode) soluble en aluminium. On impose un potentiel constant entre l'électrode de référence et la cathode, le potentiostat branché entre cathode et anode délivre alors la tension de travail. Le potentiel constant imposé est compris entre -0,5 et -1 volt.

La voie du potentiel cathodique régulé consiste à établir une tension de travail donnée entre cathode et anode, sans utiliser d'électrode de référence. On a constaté que les réactions visées (solubilisation de l'anode en aluminium et réaction avec le solvant halogéné, réduction du dérivé de titane (IV) à la cathode) sont possibles sans que le dérivé de titane (III) obtenu se réduise plus avant à la cathode. On peut ainsi opérer à un potentiel cathodique régulé compris entre 20 et 200 volts. Le passage d'un premier Faraday par mole de titane réduit le dérivé de titane (IV) en dérivé de titane (III) et fournit, par atome-gramme de titane, un équivalent-gramme d'aluminium sous forme de dérivé organoaluminique halogéné. Le passage des Faradays suivants permet d'augmenter la quantité de dérivé organoaluminique halogéné sans réduction du composé de titane (III) formé.

L'oxydo-réduction à intensité constante consiste à prédéterminer la valeur de l'intensité qui traversera l'électrolyte, un dispositif de régulation en déduisant instantanément la valeur de la différence de potentiel à appliquer entre anode et cathode pour que l'intensité soit maintenue à la valeur choisie. Selon cette voie, on opère avantageusement pour la présente invention à une intensité comprise entre 100mA et 100A.

Le procédé selon l'invention est mis en oeuvre dans une cellule d'électrolyse dont la cathode est constituée d'un métal (généralement un panier métallique) choisi notamment parmi le platine, le fer, l'aluminium et leurs alliages respectifs. La cathode peut être constituée par la cellule d'électrolyse elle-même réalisée alors en métal. L'anode d'aluminium ou d'alliage à base d'aluminium est alors disposée près de la paroi interne de la cellule. Si anode et cathode sont toutes deux en aluminium ou en alliage d'aluminium il est alors possible de réaliser l'électrolyse au moyen d'un courant alternatif.

Le milieu réactionnel obtenu après électrolyse peut être utilisé tel quel comme catalyseur de polymérisation des oléfines. Il peut également être utilisé en présence d'au moins un activateur organoaluminique tel que par exemple trialkylaluminium, aluminoxane, siloxane ou siloxyalane. Les rendements catalytiques observés sont satisfaisants.

Il est de plus possible d'améliorer les performances des composants catalytiques ainsi obtenus en y ajoutant un support tel que par exemple un halogénure de magnésium. Deux voies sont alors possibles et consistent soit à réaliser l'oxydation et la réduction électrochimiques simultanées en présence dudit halogénure de magnésium soit, de préférence, à ajouter ledit halogénure de magnésium au milieu réactionnel après électrolyse. Dans les deux cas le rapport atomique Mg/Ti est avantageusement inférieur ou égal à 15.

Par ailleurs, bien que les dialkylmagnésiums soient des réducteurs puissants, on a trouvé de façon surprenante que leur addition au milieu réactionnel après électrolyse permet l'obtention d'halogénure de magnésium naissant sans réduction appréciable du composé de titane (III) formé. Selon cette troisième voie, on ajoute au milieu réactionnel, après électrolyse, au moins un dérivé organo-magnésien de formule R-Mg-R' dans laquelle R et R' sont des radicaux alkyles identiques ou différents ayant de 1 à 12 atomes de carbone, selon un rapport atomique Mg/Ti allant jusqu'à 15. Le dérivé organo-magnésien est choisi par exemple parmi le n-butyléthylmagnésium, le n-butyl-s-butylmagnésium le di-n-hexylmagnésium et le n-butyl-n-octyl-magnésium.

L'activité des composants catalytiques selon l'invention peut également être améliorée en ajoutant au milieu réactionnel, après électrolyse, au moins un composé de vanadium (III), (IV) ou (V) dans un rapport molaire V/Ti allant jusqu'à 6, ce composé répondant à la formule générale indiquée plus haut. Il peut être ajouté au milieu réactionnel en solution dans un solvant inerte tel qu'un hydro-carbure saturé ayant de 6 à 12 atomes de carbone, par exemple une coupe d'hydrocarbures aliphatiques saturés en $C_{10}$-$C_{12}$.

La présente invention a également pour objet, un composant catalytique pour la polymérisation des oléfines comprenant au moins un composé de titane et au moins un composé organo-aluminique halogéné, en suspension dans au moins un $\alpha,\omega$-dihalogénoalcane, caractérisé en ce que le composé de titane est essentiellement un composé de titane (III), la teneur globale en titane (II) et en titane (IV) étant inférieure ou égale à 15 % de la teneur totale en titane, et en ce qu'il comprend en outre au moins un composé inorganique de magnésium à l'état de suspension.

Le composé organo-aluminique halogéné a pour formule générale $X_2Al(CH_2)_nAlX_2$ dans laquelle X est un halogène, de préférence le chlore et n est compris entre 1 et 10.

La composant catalytique peut également comprendre un solvant inerte. L'$\alpha,\omega$-dihalogénoalcane et le solvant inerte ont les définitions déjà décrites ci-dessus.

L'état d'oxydation du composé de titane est déterminé par dosage rédox en trois parties la première permettant de calculer $Ti^{2+}$ + $Ti^{3+}$, la deuxième $2Ti^{2+}$ + $Ti^{3+}$, la teneur en composé de titane à la valence II étant donc obtenue par différence, et la troisième $Ti^{2+}$ + $Ti^{3+}$ + $Ti^{4+}$ (quantité totale de titane qui permet d'en déduire la teneur en composé de $Ti^{4+}$). La méthode utilisée est décrite de façon détaillée ci-après à la page 16.Généralement la teneur en dérivé tétravalent de titane est très faible, voire indécelable. La teneur en dérivé bivalent est généralement faible (inférieure à 2 % en mole).

Par composé inorganique de magnésium on entend un sel de magnésium d'acide minéral, tel un halogénure, avantageusement le chlorure de magnésium de préférence anhydre. La composé inorganique de magnésium peut être formé in-situ lors de la préparation du composant catalytique, par exemple par réaction entre un dérivé magnésien et les dérivés halogénés présents dans l'électrolyte.

Le composant catalytique peut également comprendre au moins un composé de vanadium, avantageusement à la valence III, tel le chlorure $VCl_3$.

Dans le composent catalytique selon l'invention les rapports atomiques suivants sont avantageusement choisis :

4

Cl/Ti compris entre 10 et 180, de préférence entre 20 et 60,

Al/Ti compris entre 0,5 et 12, de préférence entre 3 et 6,

Mg/Ti compris entre 1 et 15, de préférence entre 3 et 8,

V/Ti compris entre 0 et 6, de préférence entre 0 et 3.

Le composent catalytique selon l'invention peut en outre comprendre au moins une $\alpha$-oléfine ayant par exemple de 4 à 16 atomes de carbone, le cas échéant à l'état au moins partiellement polymérisé.

Le composant catalytique peut être préparé par exemple par mélange des constituants le composé organo-aluminique halogéné pouvant être préparé selon l'enseignement du document US-A-3.787.383. Il est avantageusement préparé selon le procédé décrit ci-dessus comprenant l'étape supplémentaire d'addition d'halogénure de magnésium, avant ou après électrolyse, ou l'addition d'un dérivé organomagnésien après électrolyse permettant l'obtention de l'halogénure de magnésium in-situ.

Le composant catalytique peut être utilisé tel quel pour la polymérisation. Il peut également être additionné d'au moins un activateur comprenant au moins un dérivé organo-métallique des groupes I à III de la Classification Périodique des éléments. La dérivé organo-métallique est de préférence un dérivé organo-aluminique et la quantité ajoutée est telle que le rapport atomique Al(ajouté)/Ti($+$V) peut aller jusqu'à 100.

Avantageusement l'activateur est choisi parmi les trialkylaluminiums $AlR_3$, les tétraalkylaluminozanes $RR'Al-O-AlR''R'''$, les monoalkylsilanolatodialkylaluminiums $R-SiH_2-O-AlR'R''$ et leurs mélanges les radicaux alkyles $R,R',R'',R'''$, identiques ou différents ayant de 1 à 12 atomes de carbone. On citera par exemple le triéthylaluminium, le tri-n-butylaluminium, le tri-octylaluminium, le tétraisobutylaluminoxane, le méthylsilanolatodiisobutylaluminium.

La présente invention a également pour objet a procédé de polymérisation des oléfines, à une température comprise entre 20 et 350°C environ en présence d'un composant catalytique tel que décrit ci-dessus. Les oléfines pouvant être polymérisées selon ce procédé incluent notamment l'éthylène et les $\alpha$-oléfines ayant de 3 à 6 atomes de carbone telles que le propylène, le butène-1 et le méthyl-4-pentène-1. L'éthylène peut également être copolymérisé avec des $\alpha$-oléfines ayant de 3 à 12 atomes de carbone, telles que, outre celles qui viennent d'être citées, l'hexène-1, l'octène-1.

La polymérisation ou la copolymérisation peut être mise en oeuvre selon un processus continu ou discontinu, dans un réacteur autoclave ou tubulaire.

La polymérisation de l'éthylène seul ou avec au moins une $\alpha$-oléfine peut être effectuée à une température comprise entre 20 et 250°C, sous une pression allant jusqu'à 200 bars environ, en solution ou en suspension dans un hydrocarbure inerte ayant au moins 6 atomes de carbone tel qu'une coupe d'hydrocarbures aliphatiques saturés en $C_{10}$-$C_{12}$. La concentration en dérivé de titane du composant catalytique de type Ziegler est avantageusement comprise entre 100 et 400 millimoles par litre.

Elle peut être également mise en oeuvre, de façon continue, dans un réacteur dans lequel le temps de séjour moyen du composant catalytique est compris entre 1 et 150 secondes, et elle est effectuée à une température comprise entre 160 et 350°C sous une pression comprise entre 400 et 3000 bars.

La masse moléculaire des polymères obtenus peut être modulée en effectuant la polymérisation ou la copolymérisation en présence de jusqu'à 2 % en moles d'un agent de transfert de chaine tel que l'hydrogène.

Les exemples suivants sont donnés à titre non limitatif dans le but d'illustrer l'invention.

EXEMPLES 1 à 17 - Préparation du composant catalytique

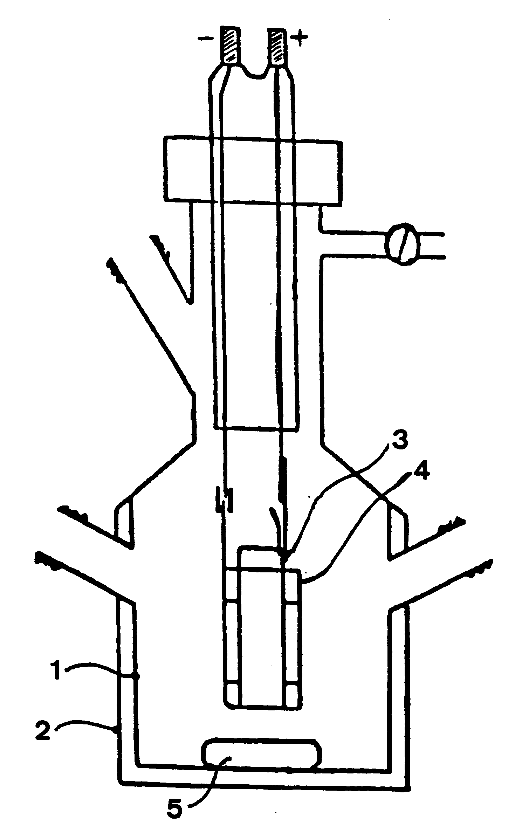

Le composant catalytique est préparé dans une cellule d'électrolyse représentée schématiquement sur la figure unique en annexe. Le corps de la cellule (1) est muni d'une double enveloppe (2) permettant de contrôler la température. L'anode (3) et la cathode (4) sont cylindriques et coaxiales. Le milieu réactionnel est agité magnétiquement au moyen du barreau (5). Les composants catalytiques sont préparés sous atmosphère inerte.

Lors de la préparation de composants catalytiques selon la variante à potentiel cathodique imposé, l'électrolyse est réalisée à l'aide d'un potentiostat délivrant une tension E telle que E = $V_A$ - $V_C$ + RI où $V_A$ est le potentiel anodique, $V_C$ le potentiel cathodique imposé à l'aide du potentiostat, et RI la chute ohmique qui représente la plus grande partie de la tension E à appliquer. L'appareillage comporte alors 3 électrodes :

- une électrode de référence Ag/AgCl/Cl$^-$ dont l'ion chlorure est fourni par une solution de chlorure de tétrabutylammonium à 0,02 mole/litre,
- une cathode (panier en platine) maintenue à un potentiel $V_c$ par rapport à l'électrode de référence, et

- une anode sous forme d'un cylindre en aluminium.

L'électrode de référence est située à proximité de la cathode. La pesée de l'anode avant et après électrolyse permet par différence, de connaître la quantité d'aluminium consommé, donc combiné au solvant chloré pour former le composé organo-aluminique chloré.

La quantité d'électicité ayant traversé l'électrolyte est mesurée au moyen d'un intégrateur placé en série sur le circuit de l'anode ou de la cathode.

Lors de la préparation de composants catalytiques selon la variante à potentiel cathodique régulé, l'électrolyse est réalisée en appliquant une tension constante $V_A$ - $V_C$ , exprimée en volts, entre :

- une anode en aluminium, et,
- une cathode (généralement panier en platine),
  et on impose une différence de potentiel entre anode et cathode.

Le tableau I résume les conditions utilisées. Dans tous ces essais :
- la quantité de solvant halogéné a été de 35 ml,
- l'anode était un cylindre d'aluminium,
- l'électrode de référence (dans les essais conduits à potentiel cathodique imposé) était une électrode $Ag/AgCl/Cl^-$,
- la tension de la cathode par rapport à l'électrode de référence (dans les essais à potentiel cathodique imposé) était de -0,5 volt,
- la température était de 35°C,
- l'azote a été utilisé comme atmosphère inerte.

On a indiqué par :
- S X : la nature du solvant halogéné utilisé :
  DCM est le dichlorométhane $ClCH_2Cl$
  DCE est le dichloro-1,2-éthane $Cl-CH_2-CH_2-Cl$
- [$TiCl_4$] : la concentration en $TiCl_4$, en millimoles par litre, dans le solvant halogéné.
- AC : l'additif de conductivité utilisé avec entre parenthèses le rapport molaire additif de conductivité/$TiCl_4$.
- $V_A$ - $V_C$ : la tension entre anode et cathode, pour les essais à potentiel cathodique régulé.
- t : la durée de l'électrolyse en minutes.

6

- F : le nombre de Faraday ayant traversé l'électrolyte à la fin de la préparation, par mole de titane.

## Tableau I
### Electrolyse à potentiel cathodique imposé

| Exemple | SX | $\left[TiCl_4\right]$ | AC | t | F |
|---------|-----|--------|--------------|------|---|
| 1 | DCM | 28,6 | —— | 300 | 1 |
| 2 | DCM | 28,6 | Hexène-1(8) | 70 | 1 |
| 3 | DCE | 28,6 | Hexène-1(8) | 55 | 1 |
| 4 | DCE* | 28,6 | Hexène-1(8) | 300 | 1 |
| 5 | DCE | 28,6 | Hexène-1(8) | 135 | 3 |
| 6 | DCE | 143 | Hexène-1(1,6) | 750 | 1 |
| 7 | DCE | 286 | Hexène-1(0,8) | 1200 | 3 |
| 8 | DCM | { 28,6 <br> +$VOCl_3$28,6 | Hexène-1(8) | 130 | 1 |

\* : DCE : 17,5 ml + coupe d'hydrocarbures saturés en $C_{10}$–$C_{12}$ (solvant inerte) : 17,5 ml.

### Electrolyse à potentiel régulé (solvant halogéné : DCE)

| Exemple | $\left[TiCl_4\right]$ | AC (Hexène-1) | Cathode | $V_A - V_C$ | F |
|---------|--------|---------------|---------|-------------|---|
| 9 | 286 | (0,8) | Pt | 20 | 3 |
| 10 | 28,6 | (8) | Pt | 50 | 3 |
| 11 | 572 | (0,4) | Pt | 50 | 3 |
| 12 | 286 | (0,8) | Pt | 50 | 5 |
| 13 | 286 | (0,8) | Pt | 50 | 6 |
| 14 | 286 | (0,8) | Pt | 50 | 8 |
| 15 | 286 | (0,8) | Pt | 70 | 3 |
| 16 | 28,6 | (8) | Al | 50 | 3 |
| 17 | 28,6 | (8) | Acier | 50 | 3 |

Exemples 18 à 43

Modification des composants catalytiques

Exemple 18

Le composant catalytique obtenu à l'exemple 1 est additionné d'une quantité d'oxytrichlorure de vanadium $VOCl_3$ telle que le rapport atomique V/Ti dans le catalyseur modifié soit égal à 1.

Exemple 19

Le composant catalytique obtenu à l'exemple 3 est additionné d'une quantité de $VOCl_3$ telle que le rapport atomique V/Ti dans le catalyseur modifié soit égal à 1.

Exemple 20

Le composant catalytique obtenu à l'exemple 2 est additionné d'une quantité de $MgCl_2$ finement broyé telle que le rapport atomique Mg/Ti dans le composant catalytique modifié soit égal à 6.

Exemple 21

Le composant catalytique obtenu à l'exemple 2 est additionné d'une quantité de n-butyléthylmagnésium telle que le rapport atomique Mg/Ti dans le composant catalytique modifié soit égal à 7.

Exemple 22

Le même processus qu'à l'exemple 21 est répété en partant du composant catalytique obtenu à l'exemple 3, le rapport Mg/Ti étant égal à 6,5.

Exemple 23

Le composent catalytique obtenu à l'exemple 18 est additionné d'une quantité de n-butyléthylmagnésium telle que le rapport atomique Mg/Ti soit égal à 6.

Exemple 24

Le composent catalytique obtenu à l'exemple 3 est additionné d'une quantité de $VOCl_3$ telle que le rapport atomique V/Ti soit égal à 1, puis d'une quantité de n-butyléthylmagnésium telle que le rapport atomique Mg/Ti soit égal à 6,5.

Exemple 25

Le processus de l'exemple 24 est répété dans sa totalité sur le composant catalytique obtenu à l'exemple 4.

Exemple 26

Le processus de l'exemple 24 est répété dans sa totalité sur le composant catalytique obtenu à l'exemple 5.

Exemple 27

Le composent catalytique obtenu à l'exemple 5 est additionné d'abord d'une quantité de n-butyléthylmagnésium telle que le rapport atomique Mg/Ti soit égal à 6 puis d'une quantité de $VOCl_3$ telle que le rapport atomique V/Ti soit égal à 1.

Exemples 28 à 39

Le processus de l'exemple 27 est répété dans sa totalité sur, respectivement, le composent catalytique obtenu aux exemples 4, 6, 7, 11, 10, 16, 17, 9, 12, 13, 14 et 15.

Exemple 40

Au composent catalytique obtenu à l'exemple 10 on ajoute successivement du tri(iso-butylate) de vanadyle $VO(C_4H_9O)_3$ de façon à obtenir un rapport atomique V/Ti égal à 1 puis du n-butyléthylmagnésium de façon à obtenir un rapport atomique Mg/Ti égal à 6.

Exemple 41

On a répété le mode opératoire de l'exemple 10 en remplaçant $TiCl_4$ par $Ti(OC_4H_9)_2Cl_2$.

Exemple 42

Au composent catalytique de l'exemple 41 on a ajouté du n-butyléthylmagnésium en une quantité telle que le rapport atomique Mg/Ti soit égal à 6.

Exemple 43

Le mode opératoire de l'exemple 13 a été répété en utilisant une cellule d'électrolyse en acier dont la cuve est utilisée comme cathode. L'anode est constituée d'une plaque d'aluminium placée à faible distance de la paroi interne de la cellule. Après passage de 3 Faradays par mole de titane sous une tension $V_A - V_C$ de 50 volts, le composant catalytique obtenu est additionné de n-butyléthylmagnésium jusqu'à un rapport atomique Mg/Ti égal à 6 puis de $VOCl_3$ jusqu'à un rapport atomique V/Ti égal à 1.

Exemples 44 à 63 - Homopolymérisation de l'éthylène à 80°C.

Dans un réacteur agité, thermostaté à 80°C au moyen d'un bainmarie, on introduit 600 ml d'une coupe d'hydrocarbures aliphatiques saturés en $C_{10}$-$C_{12}$, puis une quantité de triéthylaluminium telle que le rapport Al/Ti après introduction du composant catalytique soit égal à 100, on purge à l'azote, sature d'éthylène jusqu'à une pression de 1,1 bar et injecte la quantité voulue de composent catalytique. Après une heure on introduit 20 ml d'éthanol pour arrêter la polymérisation et recueille le polyéthylène obtenu qui est alors séparé, lavé, séché et pesé. Le rendement catalytique $R_c$ est exprimé en g de polyéthylène formé par millimole de titane, ou de titane + vanadium le cas échéant, et par heure.

Les résultats obtenus sont consignés au tableau II.

## Tableau II

| Exemple | composant catalytique de l'exemple | $R_c$ | Exemple | composant catalytique de l'exemple | $R_c$ |
|---|---|---|---|---|---|
| 44 | 1 | 125 | 54 | 22 | 1335 |
| 45 | 2 | 150 | 55 | 23 | 1035 |
| 46 | 5 | 290 | 56 | 24 | 1710 |
| 47 | 8 | 215 | 57 | 26 | 2185 |
| 48 | 10 | 300 | 58 | 32 | 1165 |
| 49 | 41 | 266 | 59 | 33 | 1260 |
| 50 | 18 | 790 | 60 | 34 | 1240 |
| 51 | 19 | 460 | 61 | 40 | 1383 |
| 52 | 20 | 205 | 62 | 42 | 2080 |
| 53 | 21 | 520 | 63 | 43 | 1280 |

Exemples 64 à 81 - Homopolymérisation de l'éthylène à 200°C

Dans un réacteur autoclave d'une capacité de 1 litre, muni de moyens d'agitation et de régulation de température, on introduit 600 ml d'une coupe d'hydrocarbures saturés en $C_{10}$-$C_{12}$ et purge à l'azote en élevant la température à 200°C. On introduit alors 0,1 millimole (exprimée en Ti+V) du composent catalytique puis l'activateur et l'éthylène jusqu'à une pression de 6 bars, pression maintenue pendant une minute.

Le contenu du réacteur est alors déchargé et le polymère est séparé, lavé, séché et pesé. La quantité obtenue Q est exprimée en grammes par milliatome-gramme de métal de transition par minute par mole.l$^{-1}$ d'éthylène.

On a fait figurer dans le tableau III, le composant catalytique utilisé (n° de l'exemple où est décrite sa préparation), la nature de l'activateur, le rapport atomique Al (de l'activateur)/Ti (ou Ti+V)(du composent catalytique) et la quantité Q de polyéthylène obtenu. Les activateurs utilisés sont référencés par :

TEA : triéthylaluminium

TiBAO : tétraisobutylaluminoxane

Siloxal $H_2$ : méthylsilanolatodiisobutylaluminium

Les rapport d'activateurs indiqués entre parenthèses sont des rapports molaires.

Tableau III

| Exemple | Catalyseur selon exemple | Activateur | Al/Ti (ou Al/Ti + V) | Q |
|---------|--------------------------|------------|----------------------|---|
| 64 | 24 | TEA | 10 | 290 |
| 65 | 25 | TEA | 10 | 355 |
| 66 | 28 | TEA | 10 | 435 |
| 67 | 28 | TiBAO | 10 | 585 |
| 68 | 28 | TiBAO | 20 | 575 |
| 69 | 28 | SILOXAL $H_2$ | 20 | 570 |
| 70 | 28 | TiBAO/SILOXAL $H_2$ (0,5 / 0,5) | 20 | 810 |
| 71 | 27 | --id-- | 20 | 925 |
| 72 | 29 | --id-- | 20 | 890 |
| 73 | 29 | TEA/SILOXAL $H_2$ (0,35 / 0,65) | 20 | 960 |
| 74 | 30 | TiBAO/SILOXAL $H_2$ (0,5 / 0,5) | 20 | 1220 |
| 75 | 30 | TEA/SILOXAL $H_2$ (0,25 / 0,75) | 20 | 1310 |
| 76 | 31 | --id-- | 20 | 1395 |
| 77 | 35 | --id-- | 20 | 1060 |
| 78 | 36 | --id-- | 20 | 1250 |
| 79 | 37 | --id-- | 20 | 1120 |
| 80 | 38 | --id-- | 20 | 1170 |
| 81 | 39 | --id-- | 20 | 1505 |

Exemples 82 à 89

Copolymérisation de l'éthylène avec au moins une $\alpha$-oléfine à 200-260°C

L'installation de polymérisation fonctionne en régime continu et comprend un réacteur autoclave agité thermostaté, alimenté en mélange d'éthylène et d'$\alpha$-oléfine au moyen de 2 compresseurs disposés en série, le second compresseur recevant en outre les monomères n'ayant pas réagi et provenant d'un séparateur dans lequel le produit du réacteur s'écoule en continu. Le séparateur est disposé à la suite d'une vanne d'expansion située à la sortie du réacteur et est maintenu sous une pression d'environ 250 bars. Le polymère recueilli au fond du séparateur est introduit, par une vanne d'expansion, dans une trémie d'où le polymère, séparé sous une pression d'environ 10 bars s'écoule dans une extrudeuse. Les gaz provenant de la trémie sont recyclés vers l'entrée du premier compresseur.

Le mélange d'éthylène et d'$\alpha$-oléfine est introduit en continu dans le réacteur dans lequel est admis également le composent catalytique L'activateur TEA(25 % en moles)-SILOXAL $H_2$(75 % en moles) a été utilisé dans tous les exemples sauf l'exemple 86 où fut utilisé un mélange 15 % TEA-85 % SILOXAL $H_2$. Le

rapport Al/Ti(+V) était égal à 20. La température est régulée à la valeur souhaitée pendant que la pression est maintenue à 800 bars pour les exemples 82 à 85 et 87 à 89, ou 1200 bars pour l'exemple 86. Le copolymère recueilli après extrusion et granulation est pesé. Le rendement catalytique $R_c$ est ici exprimé en kg de copolymère par milliatome-gramme de titane (ou bien de titane et vanadium, le cas échéant).

Sur le copolymère obtenu on détermine :
- l'indice de fluidité IF, mesuré selon la norme ASTM D-1238 (condition E) et exprimé en dg/min.
- la densité d, mesurée selon la norme ASTM D-792.

Les conditions utilisées et résultats obtenus figurent au tableau IV. On a indiqué par F la composition du flux gazeux (% en poids de chacun des monomères), E l'éthylène, P le propylène, B le butène-1, M le méthyl-4-pentène-1. Le composant catalytique utilisé est référencé au moyen de l'exemple décrivent sa préparation. La température de polymérisation est exprimée en °C. H représente le taux d'hydrogène (agent de transfert) en % en volume.

Tableau IV

| Exemple | F (% poids) | | | | H | T | Composant catalytique utilisé | $R_c$ | IF | d |
|---|---|---|---|---|---|---|---|---|---|---|
| | E | P | B | M | | | | | | |
| 82 | 65 | -- | 35 | -- | 0,1 | 240 | ex.30 | 25 | 3,7 | 0,928 |
| 83 | 50 | -- | 50 | -- | 0,1 | 240 | ex.30 | 22 | 5,7 | 0,925 |
| 84 | 50 | -- | 50 | -- | 0,1 | 260 | ex.30 | 12 | 16,4 | 0,923 |
| 85 | 50 | -- | 50 | -- | 0,1 | 220 | ex.31 | 29 | 1,3 | 0,927 |
| 86 | 39 | -- | -- | 61 | 0,03 | 240 | ex.37 | 11 | 2,2 | 0,926 |
| 87 | 50 | 25 | 25 | -- | -- | 250 | ex.39 | 10,5 | 8,9 | 0,905 |
| 88 | 35 | 40 | 25 | -- | -- | 225 | ex.39 | 12,5 | 8,8 | 0,882 |
| 89 | 30 | 35 | 35 | -- | 0,02 | 200 | ex.37 | 14,6 | 1 | 0,891 |

Exemple 90 - Détermination de la valence du titane dans les composés de titane obtenus par réduction électrochimique

Le milieu réactionnel obtenu après oxydo-réduction électrochimique, et contenant l'excès de solvant halogéné, le cas échant un solvant inerte, le composé organo-aluminique formé par oxydation et le composé de titane (III) formé par réduction, est soumis à l'analyse suivante. La détermination des états de valence du titane est faite au moyen d'un dosage rédox en 3 parties. La première partie permet de calculer la teneur en ($Ti^{2+}$ + $Ti^{3+}$) ; elle consiste à oxyder $Ti^{2+}$ en $Ti^{3+}$ au moyen de protons apportés sous la forme d'une solution d'HCl 2N préparée dans de l'eau distillée dégazée. Le $Ti^{3+}$ formé plus le $Ti^{3+}$ présent à l'origine sont alors oxydés en $Ti^{4+}$ au moyen d'un excès de solution de $Fe^{3+}$ 0,2N. $Fe^{3+}$ est réduit en $Fe^{2+}$ qui est dosé par le bichromate de potassium en milieu sulfurique-phosphorique en présence de diphénylamine sulfonate de sodium à 0,2 %. La quantité de $Fe^{2+}$ ainsi dosée correspond aux ions $Ti^{2+}$ + $Ti^{3+}$ présents à l'origine dans le composent catalytique. La deuxième partie permet de calculer la teneur en $2Ti^{2+}$ + $Ti^{3+}$. Elle consiste à oxyder $Ti^{2+}$ et $Ti^{3+}$ au moyen d'un excès d'une solution d'ions $Fe^{3+}$, en absence de protons pour éviter l'oxydation de $Ti^{2+}$ en $Ti^{3+}$, selon les réactions :

$$Ti^{2+} + 2Fe^{3+} \rightarrow Ti^{4+} + 2Fe^{2+}$$

et

$$Ti^{3+} + Fe^{3+} \rightarrow Ti^{4+} + Fe^{2+}$$

Le dosage de l'ion $Fe^{2+}$ est alors effectué au moyen de bichromate de potassium comme ci-dessus. La valeur obtenue correspond à la somme $2Ti^{2+}$ + $Ti^{3+}$ présente dans le composent catalytique. La troisième partie permet de déterminer la teneur en $Ti^{4+}$ par réduction au moyen de triéthylaluminium selon un rapport atomique Al/Ti égal à 6, du titane (IV) présent en titane (III) et titane (II). Le dosage est alors effectué selon la première partie ci-dessus la valeur trouvée pour $Ti^{2+}$ + $Ti^{3+}$ correspondant à la somme $Ti^{2+}$ + $Ti^{3+}$ + $Ti^{4+}$ des ions présents dans le composent catalytique analysé et par conséquent à la teneur totale en titane. Les différents pourcentages sont calculés en résolvent le système d'équations suivant:

$$Ti^{2+} + Ti^{3+} = A$$
$$2\,Ti^{2+} + Ti^{3+} = B$$
$$Ti^{2+} + Ti^{3+} + Ti^{4+} = C$$

Ainsi le catalyseur obtenu à l'exemple 12 contient 97,1 % de Ti(III), 1,8 % de Ti(II) et 1,1 % de titane (IV). Après un stockage de 2 mois à température ambiante à l'abri de la lumière, ces teneurs deviennent respectivement : 85,5 %, 6,5 % et 7,9 %. L'addition de butyléthylmagnésium sur le catalyseur fraichement préparé ne modifie pas sensiblement la teneur en Ti(III) que l'on trouve alors égale à 96,6 %.

## Revendications

1. Procédé de préparation d'un composant catalytique pour la polymérisation des oléfines, comprenant l'oxydation électrochimique au moins partielle de l' aluminium dans un solvant halogéné du type $\alpha,\omega$-dihalogénoalcane, caractérisé en ce qu'il comprend simultanément la réduction électrochimique d'un composé de titane (IV).

2. Procédé selon la revendication 1, caractérisé en ce qu'il est mis en oeuvre, en outre, en présence d'un solvant inerte comprenant au moins un hydrocarbure aliphatique ou cycloaliphatique saturé ayant de 6 à 14 atomes de carbone.

3. Procédé selon l'une des revendications 1 et 2, caractérisé en ce qu'il est en outre mis en oeuvre en présence d'au moins une $\alpha$-oléfine ayant de 4 à 16 atomes de carbone.

4. Procédé selon l'une des revendications 1 à 3, caractérisé en ce que le composé de titane (IV) a pour formule $Ti(OR)_n X_{4-n}$ dans laquelle X est un halogène, $0 \leq n \leq 4$ et R est un radical alkyle ayant de 1 à 10 atomes de carbone.

5. Procédé selon l'une des revendications 1 à 4, caractérisé en ce que la concentration du milieu réactionnel en composé de titane (IV) est comprise entre 20 et 600 millimoles par litre.

6. Procédé selon l'une des revendications 1 à 5, caractérisé en ce que l'on ajoute au milieu réactionnel pendant l'oxydation et la réduction électrochimiques simultanées, un composé de vanadium (IV) ou de vanadium (V) choisi parmi les composés de formule générale $VO(OR)_m X_{3-m}$ dans laquelle X est un halogène, R est un radical alkyle ayant de 1 à 6 atomes de carbone et $0 \leq m \leq 3$, et les composés de formule $VX_4$ dans laquelle X est un halogène.

7. Procédé selon l'une des revendications 1 à 6, caractérisé en ce que l'oxydation et la réduction électrochimiques simultanées sont réalisées en faisant passer dans le milieu réactionnel une quantité d'électricité comprise entre 1 et 12 Faradays par mole de titane.

8. Procédé selon l'une des revendications 1 à 7, caractérisé en ce qu'il est mis en oeuvre à potentiel cathodique imposé compris entre -0,5 et -1 volt.

9. Procédé selon l'une des revendications 1 à 7, caractérisé en ce qu'il est mis en oeuvre à un potentiel cathodique régulé compris entre 20 et 200 volts.

10. Procédé selon l'une des revendications 1 à 9, caractérisé en ce que l'oxydation et la réduction électrochimiques simultanées ont lieu en présence d'au moins un halogénure de magnésium.

11. Procédé selon l'une des revendications 1 à 9, caractérisé en ce que au moins un halogénure de magnésium ou au moins un dérivé organomagnésien de formule R-Mg-R' dans laquelle R et R' sont des radicaux alkyles, identiques ou différents, ayant de 1 à 12 atomes de carbone, est ajouté au milieu réactionnel après l'oxydation et la réduction électrochimique simultenées.

12. Procédé selon l'une des revendications 10 et 11, caractérisé en ce que l'halogénure de magnésium ou le dérivé organo-magnésien est utilisé selon un rapport atomique Mg/Ti inférieur ou égal à 15 .

EP 0 351 265 B1

13. Procédé selon l'une des revendicatins 1 à 12, caractérisé en ce que l'on ajoute au milieu réactionnel après l'oxydation et la réduction électrochimiques simultanées au moins un composé de vanadium (III), (IV) ou (V).

14. Procédé selon la revendication 13, caractérisé en ce que le composé de vanadium (III), (IV) ou (V) est ajouté selon un rapport atomique V/Ti allant jusqu'à 6.

15. Composant catalytique pour la polymérisation des oléfines comprenant au moins un composé de titane et au moins un composé organo-aluminique halogéné en suspension dans au moins un α,ω-dihalogéno-alcane caractérisé en ce que le composé de titane est essentiellement un composé de titane (III), la teneur globale en titane (II) et en titane (IV) étant inférieure ou égale à 15 % de la teneur totale en titane, et en ce qu'il comprend en outre au moins un composé inorganique de magnésium à l'état de suspension.

16. Composant catalytique selon la revendication 15, caractérisé en ce qu'il comprend en outre au moins un composé de vanadium, le rapport atomique V/Ti étant compris entre 0 et 6.

17. Composant catalytique selon la revendication 15, caractérisé en ce que le rapport atomique Cl/Ti est compris entre 10 et 180, le rapport Al/Ti est compris entre 0,5 et 12, et le rapport Mg/Ti est compris entre 1 et 15.

18. Procédé de polymérisation des oléfines, à une température comprise entre 20 et 350°C, en présence d'un composant catalytique conforme à l'une des revendications 15 à 17.

19. Procédé selon la revendication 18, caractérisé en ce que l'oléfine est l'éthylène seul ou en mélange avec au moins une α-oléfine et en ce que la polymérisation est effectuée à une température comprise entre 20 et 250°C sous une pression allant jusqu'à 200 bars, en solution ou en suspension dans un hydrocarbure inerte ayant au moins 6 atomes de carbone.

20. Procédé selon le revendication 19, caractérisé en ce que la concentration en dérivé de titane dans le composent catalytique est comprise entre 100 et 400 millimoles par litre.

21. Procédé selon la revendication 19, mis en oeuvre de façon continue dans un réacteur dans lequel le temps de séjour moyen du composant catalytique est compris entre 1 et 150 secondes, caractérisé en ce que la polymérisation est effectuée à une température comprise entre 160 et 350°C sous une pression comprise entre 400 et 3000 bars.

**Claims**

1. Process for the preparation of a catalytic composition for the polymerization of olefins, comprising the at least partial electrochemical oxidation of aluminium in a halogenated solvent of the α,ω-dihalogenoalkane type, characterized in that it simultaneously includes the electrochemical reduction of a compound of titanium (IV).

2. Process according to Claim 1, characterized in that it is carried out, in addition, in the presence of an inert solvent comprising at least one saturated aliphatic or cycloaliphatic hydrocarbon having from 6 to 14 carbon atoms.

3. Process according to one of Claims 1 and 2, characterized in that it is in addition carried out in the presence of at least one α-olefin having from 4 to 16 carbon atoms.

4. Process according to one of Claims 1 to 3, characterized in that the titanium (IV) compound has the formula $Ti(OR)_nX_{4-n}$, in which X is a halogen, $0 \leq n \leq 4$ and R is an alkyl radical having from 1 to 10 carbon atoms.

5. Process according to one of Claims 1 to 4, characterized in that the concentration of titanium (IV) compound in the reaction medium is between 20 and 600 millimoles per litre.

13

6. Process according to one of Claims 1 to 5, characterized in that a vanadium (IV) or vanadium (V) compound, chosen from the compounds of general formula $VO(OR)_mX_{3-m}$, in which X is a halogen, R is an alkyl radical having from 1 to 6 carbon atoms and $0 \leq m \leq 3$, and the compounds of formula $VX_4$, in which X is a halogen is added to the reaction medium during the simultaneous electrochemical oxidation and electrochemical reduction.

7. Process according to one of Claims 1 to 6, characterized in that the simultaneous electrochemical oxidation and electrochemical reduction are carried out by passing a quantity of electricity of between 1 and 12 Faradays per mole of titanium through the reaction medium.

8. Process according to one of Claims 1 to 7, characterized in that it is carried out using an imposed cathodic potential of between -0.5 and -1 volt.

9. Process according to one of Claims 1 to 7, characterized in that it is carried out at a regulated cathodic potential of between 20 and 200 volts.

10. Process according to one of Claims 1 to 9, characterized in that the simultaneous electrochemical oxidation and electrochemical reduction take place in the presence of at least one magnesium halide.

11. Process according to one of Claims 1 to 9, characterized in that at least one magnesium halide or at least one organo-magnesium derivative of formula R-Mg-R', in which R and R' are alkyl radicals, which may be identical or different, having from 1 to 12 carbon atoms, is added to the reaction medium after the simultaneous electrochemical oxidation and electrochemical reduction.

12. Process according to one of Claims 10 and 11, characterized in that the magnesium halide or the organo-magnesium derivative is used so as to obtain an atomic ratio Mg/Ti less than or equal to 15.

13. Process according to one of Claims 1 to 12, characterized in that at least one compound of vanadium (III), (IV) or (V) is added to the reaction medium after the simultaneous electrochemical oxidation and electrochemical reduction.

14. Process according to Claim 13, characterized in that the compound of vanadium (III), (IV) or (V) is added to give an atomic ratio V/Ti of up to 6.

15. Catalytic composition for the polymerization of olefins comprising at least one titanium compound and at least one halogenated organo-aluminium compound, in suspension in at least one $\alpha,\omega$-di-halogenoalkane, characterized in that the titanium compound is essentially a titanium (III) compound, the overall content of titanium (II) and titanium (IV) being less than or equal to 15% of the total titanium content, and in that it comprises in addition at least one inorganic magnesium compound in suspension.

16. Catalytic composition according to Claim 15, characterized in that it comprises in addition at least one vanadium compound, the atomic ratio V/Ti being between 0 and 6.

17. Catalytic composition according to Claim 15, characterized in that the atomic ratio Cl/Ti is between 10 and 180, the ratio Al/Ti is between 0.5 and 12 and the ratio Mg/Ti is between 1 and 15.

18. Process for the polymerization of olefins, at a temperature of between 20 and 350°C, in the presence of a catalytic composition which conforms to one of Claims 15 to 17.

19. Process according to Claim 18, characterized in that the olefin is ethylene alone or in admixture with at least one $\alpha$-olefin, and in that the polymerization is carried out at a temperature of between 20 and 250°C under a pressure of up to 200 bars, in solution or in suspension in an inert hydrocarbon having at least 6 carbon atoms.

20. Process according to Claim 19, characterized in that the concentration of titanium derivative in the catalytic composition is between 100 and 400 millimoles per litre.

EP 0 351 265 B1

**21.** Process according to Claim 19, carried out in a continuous manner in a reactor in which the mean residence time of the catalytic composition is between 1 and 150 seconds, characterized in that the polymerization is carried out at a temperature of between 160 and 350 °C under a pressure of between 400 and 3,000 bars.

**Patentansprüche**

**1.** Verfahren zur Herstellung eines Katalysatorbestandteils für die Polymerisation von Olefinen, umfassend die zumindest teilweise elektrochemische Oxidation von Aluminium in einem halogenhaltigen Lösungsmittel des Typs $\alpha,\omega$-Dihalogenalkan, dadurch gekennzeichnet, daß es gleichzeitig die elektrochemische Reduktion einer Titan(IV)verbindung umfaßt.

**2.** Verfahren nach Anspruch 1, dadurch gekennzeichnet, daß es weiters in Gegenwart eines inerten Lösungsmittels durchgeführt wird, das mindestens einen aliphatischen oder cycloaliphatischen gesättigten Kohlenwasserstoff mit 6 bis 14 Kohlenstoffatomen enthält.

**3.** Verfahren nach Anspruch 1 oder 2, dadurch gekennzeichnet, daß es in Gegenwart mindestens eines $\alpha$-Olefins mit 4 bis 16 Kohlenstoffatomen durchgeführt wird.

**4.** Verfahren nach einem der Ansprüche 1 bis 3, dadurch gekennzeichnet, daß die Titan(IV)verbindung die Formel $Ti(OR)_n X_{4-n}$ hat, in der X ein Halogen ist, $0 \leq n \leq 4$ und R ein Alkylrest mit 1 bis 10 Kohlenstoffatomen ist.

**5.** Verfahren nach einem der Ansprüche 1 bis 4, dadurch gekennzeichnet, daß die Konzentration der Titan(IV)verbindung in dem Reaktionsmilieu zwischen 20 und 600 Millimol pro Liter beträgt.

**6.** Verfahren nach einem der Ansprüche 1 bis 5, dadurch gekennzeichnet, daß man dem Reaktionsmilieu während der gleichzeitigen elektrochemischen Oxidation und Reduktion eine Vanadium(IV)- oder Vanadium(V)-Verbindung zusetzt, die ausgewählt ist aus den Verbindungen der allgemeinen Formel $VO(OR)_m X_{3-m}$, in der X ein Halogen ist, R ein Alkylrest mit 1 bis 6 Kohlenstoffatomen ist und $0 \leq m \leq 4$, sowie den Verbindungen der Formel $VX_4$, in der X ein Halogen ist.

**7.** Verfahren nach einem der Ansprüche 1 bis 6, dadurch gekennzeichnet, daß die gleichzeitige elektrochemische Oxidation und Reduktion dadurch erfolgen, daß in das Reaktionsmilieu eine Elektrizitätsmenge zwischen 1 und 12 Faraday pro Mol Titan eingeleitet wird.

**8.** Verfahren nach einem der Ansprüche 1 bis 7, dadurch gekennzeichnet, daß es bei einem angelegten Kathodenpotential zwischen -0,5 und -1 Volt durchgeführt wird.

**9.** Verfahren nach einem der Ansprüche 1 bis 7, dadurch gekennzeichnet, daß es bei einem geregelten Kathodenpotential zwischen 20 und 200 Volt durchgeführt wird.

**10.** Verfahren nach einem der Ansprüche 1 bis 9, dadurch gekennzeichnet, daß die gleichzeitige elektrochemische Oxidation und Reduktion in Gegenwart mindestens eines Magnesiumhalogenids stattfinden.

**11.** Verfahren nach einem der Ansprüche 1 bis 9, dadurch gekennzeichnet, daß nach der gleichzeitigen elektrochemischen Oxidation und Reduktion dem Reaktionsmilieu mindestens ein Magnesiumhalogenid oder mindestens eine Organomagnesiumverbindung der Formel R-Mg-R' zugesetzt wird, in der R und R' identische oder verschiedene Alkylreste mit 1 bis 12 Kohlenstoffatomen sind.

**12.** Verfahren nach Anspruch 10 oder 11, dadurch gekennzeichnet, daß das Magnesiumhalogenid oder die Organomagnesiumverbindung in einem Atomverhältnis Mg/Ti von weniger als oder gleich 15 eingesetzt wird.

**13.** Verfahren nach einem der Ansprüche 1 bis 12, dadurch gekennzeichnet, daß man dem Reaktionsmilieu nach der gleichzeitigen elektrochemischen Oxidation und Reduktion mindestens eine Vanadium(III)-, Vanadium(IV)- oder Vanadium(V)-Verbindung zusetzt.

15

**14.** Verfahren nach Anspruch 13, dadurch gekennzeichnet, daß die Vanadium(III)-, Vanadium(IV)- oder Vanadium(V)-Verbindung in einem Atomverhältnis V/Ti von höchstens 6 zugesetzt wird.

**15.** Katalysatorbestandteil für die Polymerisation von Olefinen, welcher mindestens eine Titanverbindung und mindestens eine halogenhaltige Organoaluminiumverbindung in Suspension in mindestens einem $\alpha,\omega$-Dihalogenalkan enthält, dadurch gekennzeichnet, daß die Titanverbindung im wesentlichen eine Titan(III)-Verbindung ist, wobei der Gesamtgehalt an Titan(II) und an Titan(IV) weniger als oder gleich 15% des Gesamttitangehalts beträgt, und daß er weiters mindestens eine anorganische Magnesiumverbindung im Suspensionszustand enthält.

**16.** Katalysatorbestandteil nach Anspruch 15, dadurch gekennzeichnet, daß er weiters mindestens eine Vanadiumverbindung enthält, wobei das Atomverhältnis V/Ti zwischen 0 und 6 beträgt.

**17.** Katalysatorbestandteil nach Anspruch 15, dadurch gekennzeichnet, daß das Atomverhältnis Cl/Ti zwischen 10 und 180, das Verhältnis Al/Ti zwischen 0,5 und 12 und das Verhältnis Mg/Ti zwischen 1 und 15 beträgt.

**18.** Verfahren zur Polymerisation von Olefinen bei einer Temperatur zwischen 20° und 350°C in Gegenwart eines Katalysatorbestandteils nach einem der Ansprüche 15 bis 17.

**19.** Verfahren nach Anspruch 18, dadurch gekennzeichnet, daß das Olefin Ethylen allein oder in Mischung mit mindestens einem $\alpha$-Olefin ist, und daß die Polymerisation bei einer Temperatur zwischen 20° und 250°C, unter einem Druck bis zu 200 bar und in Lösung oder in Suspension in einem inerten Kohlenwasserstoff mit mindestens 6 Kohlenstoffatomen durchgeführt wird.

**20.** Verfahren nach Anspruch 19, dadurch gekennzeichnet, daß die Konzentration der Titanverbindung in dem Katalysatorbestandteil zwischen 100 und 400 Millimol pro Liter beträgt.

**21.** Verfahren nach Anspruch 19, das kontinuierlich in einem Reaktor durchgeführt wird, in dem die mittlere Verweilzeit des Katalysatorbestandteils zwischen 1 und 150 Sekunden beträgt, dadurch gekennzeichnet, daß die Polymerisation bei einer Temperatur zwischen 160° und 350°C und unter einem Druck zwischen 400 und 3000 bar durchgeführt wird.